# EUROPEAN PATENT APPLICATION

(11) **EP 4 606 464 A1**
(43) Date of publication of application: **27.08.2025**
(21) Application number: 24158616.3
(22) Date of filing: 20.02.2024
(51) Int. Cl.: B01D 61/20, B01D 65/10

(54) **METHOD OF PERFORMING GAS/LIQUID-BASED INTEGRITY TEST**

(71) Applicant: Sartorius Stedim Biotech GmbH, 37079 Göttingen (DE)
(72) Inventor: Hansmann, Bjoern, 37077 Göttingen (DE)
(74) Representative: Müller-Boré & Partner Patentanwälte PartG mbB

(57) **Abstract**

The present invention relates to a method of performing a gas/liquid-based integrity test, wherein air in a membrane is replaced by a water-soluble gas before wetting the membrane. Further, the present invention relates to a method of producing an integrity-tested object having a membrane and at least one boundary member.

## Description

The present invention relates to a method of performing a gas/liquid-based integrity test, wherein air in a membrane is replaced by a water-soluble gas before wetting the membrane. Further, the present invention relates to a method of producing an integrity-tested object having a membrane and at least one boundary member.

Integrity testing is a critical quality assurance process when using microporous or ultraporous membrane filters in applications requiring bioburden control. The purpose of integrity testing filters is to provide assurance that microporous or ultraporous filters will perform as required and to detect the presence of oversized pores or defects that may affect the filter's retention capacity.

Microporous or ultraporous filters which are commonly used for sterile filtration or other filtration techniques are characterized in that the peripheral region of a microporous or ultraporous filter membrane, simply referred to herein as membrane, is connected to a member which serves as its boundary, also referred to herein as boundary member. Without being limited thereto, the boundary member may be an end cap, e.g. in case of a membrane having a tubular shape, or may be a frame, e.g. in case of a membrane having a flat shape. Depending on the shape of the membrane, connecting the peripheral region thereof to the boundary member may be achieved by various different means including embedding, overmolding, hydrophobic gluing, or ultrasonic welding. As required, more than one boundary member may be used for being connected to the peripheral region of the membrane. In each case, the peripheral region of the membrane must be connected to the boundary member with the aim to ensure sterility of the obtained filter.

Various integrity tests for such filters are known for the above-mentioned purpose, such as the particle challenge test or -for sterilizing grade filters- the bacterial challenge test, the liquid-liquid porometry test, gas/liquid-based tests, e.g., the bubble point test, the gas-liquid diffusion test, and the binary-gas test, and diffusion tests for measuring tracer components. Some of these tests are destructive and therefore not suitable as a pre-use test.

A commonly applied non-destructive gas/liquid-based integrity test for membrane filters, especially for virus filters, is the gas-liquid diffusion test. In said gas-liquid diffusion test, the membrane of the filter is firstly wetted. When wetted, said membrane provides a liquid layer across which a diffusive gas flow occurs, as expressed with Fick's law of diffusion. In the gas-liquid diffusion test, the gas pressure on one side of the membrane is increased and the diffusive flow increases linearly until either the liquid layer begins to thin or until a bubble point is reached, where robust bulk air flow commences. A pass or fail of the filter by the gas-liquid diffusion test is easily measured with automated test equipment with oversized pores or defects of the filter being recognized by an increase in flow values beyond a validated maximum.

Another used non-destructive gas-liquid-based integrity test for membrane filters is the bubble-point test. This test is particularly used for small filter assemblies such as filters installed in a disc holder, cartridge filter housing or capsule. In said bubble point test, the membrane is firstly wetted, an air or nitrogen pressure is incrementally applied to the wetted membrane, and a gas flow across the membrane at each pressure stage is measured. As the pressure increases, it will reach a point at which it exceeds the capillary forces of the largest pores in the membrane. The automated test equipment measures the increase in air flow as the wetting liquid is expelled and bulk gas flow occurs. The measured value corresponds to the bubble point, which is defined as the pressure at which the flow transitions from diffusive flow through the wetting liquid in the pores to convective flow through the pores. Based on the determined bubble point, a pass or fail of the tested membrane or filter is evaluated when comparing the determined value to known literature values for the membrane or filter.

A further non-destructive gas/liquid-based integrity test for microporous and ultraporous membranes is the binary-gas test. The test uses a binary gas mixture and is based on the principle of differing gas permeabilities through the liquid layer of a wetted membrane that results in a concentration enhancement of the faster permeating gas. In an integral membrane, the permeate composition can be predicted based on the transport properties of the gases permeating through the liquid layer and the known operating conditions. A deviation from the expected composition ratio is an indication of the presence of a defect or oversized pores. Particularly, in an integral membrane, the permeate gas is depleted of the slower permeating gas. While, if a defect, open pore or oversized pore is present, then the leak through the membrane will contaminate the permeate stream, resulting in an elevated concentration of the slower permeating gas.

For correct performance of gas/liquid-based integrity tests, complete wetting of filter elements, especially of the membrane, is a crucial prerequisite. This applies for the above-mentioned gas-liquid diffusion test, bubble-point test and binary-gas test as well as for other well-known gas/liquid-based test methods. Insufficient wetting can cause the integrity test results to be ambiguous or even to produce false negative test results. False negative test results could lead the operator to discard his filtrate after a "failed post-use test" in the belief that the filter does not have integrity. However, especially in the production of pharmaceutical biomolecules, discard of a filtrate due to a false negative post-use test can cause enormous economic damage. On the other hand, a "failed pre-use test" could also lead to the discarding of the suspected non-integer filter element, which can result in a high reject rate, especially for producers of filter elements. In addition, this false negative test result in a pre-use test leads to extra work and delays in the production process, which reduces productivity and can lead to further losses in time-sensitive operations such as the harvesting of bioreactors.

Incomplete wetting of the filter or membrane to be tested is difficult to detect in advance of the gas/liquid-based integrity test. Two major sources of error that can lead to incomplete wetting are currently known. On one hand, macroscopic air inclusions in front of, between or behind the materials of the filter or membrane can prevent full wetting of the filter or membrane. Specifically, only hydrodynamically accessible areas of the filter or membrane can be flowed through during wetting, while areas of the filter or membrane behind inclusions of air, i.e., less accessible areas of the filter or membrane, rely on capillary lateral fluid transport through the materials to lead to wetting of areas located. However, in case said capillary lateral fluid transport to hydrodynamically inaccessible areas is insufficient, wetting of the filter or membrane does not completely occur. On the other hand, microscopic air inclusions trapped in pores and/or voids of the filter or membrane material prevents complete wetting of the material surrounding said pores and/or voids.

To rule out a false negative test result of an integrity test, no matter whether in a pre-use test or a post-use test, the operator will first seek a repeat of the gas/liquid-based integrity test. Thus, commonly an operator will apply a two-step gas/liquid-based integrity test, following the work flow below:
1. arranging the filter/membrane in a space for wetting
2. wetting with a wetting medium, preferable water, under pressure, thereby displacing air from the filter/membrane unit wetting is achieved
3. applying a gas pressure, for example air, for testing
4. performing a gas/liquid-based integrity test, for example the bubble point test, the gas-liquid diffusion test or the binary-gas test
5. repeating steps 1 to 4 in case the result of the gas/liquid-based test is "failed"

However, the described two-step gas/liquid-based integrity test has the drawbacks of increased water consumption and increased time required for integrity tests. Additionally, even by said two-step integrity test false negative test results cannot be excluded and filters can be evaluated as "failed" and discarded, although they pass an integrity test when tested by another method, for example the particle challenge test.

In the prior art, some approaches to achieve improved wetting are known. For example, for hydrophilic membranes, it is known that these membranes turn hydrophobic in the peripheral regions after embedded into a boundary member made of thermoplastic polymers and hence a subsequent gas/liquid-based integrity test is defective due to poor wetting in these hydrophobic peripheral regions. To overcome these difficulties caused by hydrophobicity in the peripheral region of membranes, EP 0 096 306 A3 teaches to apply a heat-sealable non-porous polyester film. As an alternative approach, WO 96/14913 A1 and DE 43 39 810 C1 teach to subsequently make the hydrophobic parts hydrophilic again by means of a hydrophilizing agent.

Additionally, for improving wetting of filters and membranes, the following techniques are known: Increasing the temperature of the wetting fluid, introducing back pressure, increasing flow through the cartridge, increasing the wet time, using a wetting agent such as glycerine and polyvinylpyrrolidone, using alternative wetting fluids such as alcohol, either isopropyl or an ethanol-based alcohol.

However, the known approach to improve wetting of filters and membranes have the drawbacks of using large rinsing volumes, repetition of the integrity test in case the result of the test is negative, i.e., in case of a "not integer" or "failed" evaluation of the filter or membrane, use of organic solvents or additives, which potentially lead to explosive atmospheres and can contaminate waste water, mechanical damage to the membrane, undesired changes in membrane properties due to applied wetting agents or temperature treatment, and contamination of the filtrate by wetting agents.

Accordingly, in view of the above, it is an object of the present invention to provide a method of performing a gas/liquid-based integrity test on an object having a membrane, which shall improve wetting of the membrane and which shall reduce the occurrence of false negative test results in integrity tests relying on a liquid film provided in and on the membrane.

The above object has been solved by providing the embodiments characterized in the claims.

In a first aspect of the present invention, there is provided a method of performing a gas/liquid-based integrity test, the method comprising the following steps (a) to (f) in this order:
(a) providing an object having a membrane;
(b) arranging the object in a space for wetting;
(c) replacing air in the membrane by a water-soluble gas, wherein the water-soluble gas has a solubility in water at a temperature of 293.15 K and a pressure of 101.325 kPa of at least 54 mg/L;
(d) wetting the membrane of the object with water or an aqueous solution;
(e) applying gas pressure to at least one side of the membrane; and
(f) testing integrity of the object.

As found by the present inventors, when air in the membrane is replaced by a water-soluble gas having a solubility in water at a temperature of 293.15 K and a pressure of 101.325 kPa of at least 54 mg/L before wetting the membrane, wetting of the membrane can be improved. The reason therefore is that the water solubility of said water-soluble gas is at least three-times higher than the water solubility of nitrogen - the main component of air - and hence the water solubility of the water-soluble gas is higher than that of air.

When replacing air by such a water-soluble gas before wetting the membrane, the formation of macroscopic and microscopic inclusions of air in the membrane is not possible due to the replacement of air by the water-soluble gas. Instead, it is only possible to form inclusions of the water-soluble gas when wetting the membrane. Due to its higher solubility in water, the water-soluble gas of such initially formed inclusions dissolves more efficiently in water or an aqueous solution applied in the wetting step compared to air. Further, by dissolving the water-soluble gas in water or the aqueous solution, the volume of the gas inclusions decreases and the inclusions themselves are reduced if not removed completely. This effect is more pronounced for gases having a higher solubility in water and hence more distinctive when replacing air by the water-soluble gas before wetting the membrane. Therefore, by the method of performing a gas/liquid integrity test of the present invention, which comprises a step of replacing air by a water-soluble gas having a solubility in water at a temperature of 293.15 K and a pressure of 101.325 kPa of at least 54 mg/L, macroscopic gas inclusions preventing complete wetting of the membrane are reduced compared to wetting in atmospheric air and said inclusions can even be removed, thereby increasing the surface of hydrodynamically accessible areas of the membrane. Similarly, microscopic gas inclusions trapped in pores and/or voids of the membrane are reduced or even removed by dissolving the water-soluble gas in the water or aqueous solution. As a result, wetting of the membrane by water or an aqueous solution can be improved.

Advantageously, due to improved wetting of the membrane, the occurrence of false negative test results of gas/liquid-based integrity tests of a membrane can be reduced. Accordingly, there is no need for the operator to re-test as many filters or membranes evaluated once as non-integer by the above-outlined two-step gas/liquid-based integrity test, and hence the total number of gas/liquid-based integrity tests to be carried out is reduced.

In the following, the method of performing a gas/liquid-based integrity test according to the present invention, comprising a step of replacing air in a membrane by a water-soluble gas, wherein the water-soluble gas has a solubility in water at a temperature of 293.15 K and a pressure of 101.325 kPa of at least 54 mg/L, is described in detail.

Herein, a gas/liquid-based integrity test refers to a test for evaluating the integrity of an object having a membrane, based on a liquid film provided in the membrane and a gas prevented from passing freely through the membrane by the liquid film. Integrity means that the tested object is fully functional for the intended use. For objects having a membrane, integrity means that they do not let unwanted components pass. Integrity of objects having a membrane is not given in case the object or membrane has a defect or oversized pores. The gas/liquid-based integrity test is not particularly limited and may e.g. be a gas-liquid diffusion test, a bubble-point test or a binary-gas test. The principals and work-flows of said gas/liquid-based integrity tests are readily known to a person skilled in the art and can be readily modified by a person skilled in the art according to the additional steps of the gas/liquid-based integrity test of the present invention.

In step (a) of the method of performing a gas/liquid-based integrity test, an object having a membrane is provided.

The object having a membrane is not specifically limited as long as the object comprises a membrane or is a membrane, and integrity thereof can be evaluated by a gas/liquid-based integrity test.

In a preferred embodiment of the present invention, the object having a membrane is a filter, preferably a filter for sterile filtration.

The object having a membrane, such as a filter, may comprise a membrane and at least one boundary member, wherein the peripheral region of the membrane is fluid-tight connected to the at least one boundary member. Typically, the at least one boundary member comprises a thermoplastic polymer material in the area the membrane is connected to. Preferably, the boundary member consists of at least one thermoplastic polymer material. Thereby, it is possible to achieve a particularly stable and fluid-tight connection of the boundary element and the membrane by melting the thermoplastic polymer material in the area of the intended connection and then placing the boundary element on the membrane. The thermoplastic polymer material may comprise low-melting thermoplastics such as polyolefins, among which polyethylene, polypropylene, and polyethylene propylene) may be mentioned, without, however, being limited thereto. In a preferred embodiment, the polyolefin is polypropylene. Apart from the membrane and the at least one boundary member, the object having a membrane, such as a filter, may comprise a backflow safeguard and/or a core. Furthermore, one or more drainage or support nonwovens may be provided as additional components in the object having a membrane. These additional components, if present, are suitably arranged in or on the membrane.

Herein, a membrane refers to a porous layer, such as a continuous solid matrix containing pores therebetween. The membrane has a first main surface and a second main surface opposite the first main surface. The membrane may be a single-layered membrane or may be a combination of two or more (separate) membranes, i.e., the membrane may consist of only one single membrane or of two or more distinct membranes each of which may have different membrane properties (e.g. pore size, material, thickness).

The membrane can comprise at least one of a hydrophobic material and a hydrophilic material. According to a preferred embodiment of the present invention, the membrane comprises a hydrophobic material or consists of at least one hydrophobic material. As hydrophobic materials are intrinsically water-repellent, surfaces of membranes comprising a least one hydrophobic material are usually not sufficiently wettable, resulting in a high number of false-negative results of performed gas/liquid-based integrity tests. Therefore, since wetting of a membrane is improved by the method according to the present invention, the number of false-negative test results is particularly reduced when integrity-testing membranes comprising at least one hydrophobic material. A material is hydrophobic when it has a contact angle with a water droplet determined according to EN ISO 19403-2:2020-04 of more than 90°. In case the contact angle of the material with a water droplet is 90° or less the material is considered as hydrophilic.

Depending on the intended application of the object having a membrane, such as a filter, either a hydrophilic or a hydrophobic membrane may be used.

Preferably, the membrane is a hydrophobic membrane. Analogous to membranes comprising at least one hydrophobic material, the number of false-negative test results is particularly reduced by the method according to the present invention when integrity-testing hydrophobic membranes. A membrane is considered to be a hydrophilic membrane in case its water contact angle is 90° or less, whereas a hydrophobic membrane has a water contact angle of more than 90°. The water contact angle of the membrane may be determined according to EN ISO 19403-2:2020-04.

Alternatively, the membrane may be a hydrophilic membrane. The number of false-negative test results can be reduced by the method according to the present invention when integrity-testing hydrophilic membranes.

A hydrophobic material of the membrane can be intrinsically hydrophobic and/or hydrophobically modified. Hydrophobic modification of materials can be achieved by means of fluorine-containing agents, for example in monomeric, oligomeric or polymeric form. Suitable modification processes are known to the person skilled in the art. The hydrophobic material of the membrane may comprise at least one polymer selected from the group consisting of cellulose acetate, a polyamide, a polyethersulfon, a polyetherketone, a polyolefin, a polyvinylidene fluorid and a polytetrafluorethylene. Suitable polyolefins are polyethylene, polypropylene, polyethylene propylene) and mixtures thereof. Preferably, the polymer is selected from the group consisting of cellulose acetate, a polyethersufon, a polyamide, a polyvinylidene fluorid and a polytetrafluorethylene.

A hydrophilic material of the membrane can be intrinsically hydrophilic and/or hydrophilic modified. Suitable modification processes, such as saponification of ester side chains of a polymer, for example of cellulose acetate, are known to the person skilled in the art. The hydrophilic material of the membrane may comprise at least one derivative of cellulose. Examples of derivatives of cellulose are nitrocellulose, mixed esters of cellulose and regenerated cellulose. The at least one derivative of cellulose may be crosslinked. If crosslinked, 0.05% to 20% of the hydroxide groups of the derivative of cellulose can be crosslinked.

Depending on the intended use of the object to be tested, i.e., depending on the size of the particles to be separated, the membrane has a suitable pore size. Typical pore sizes are in the range from 0.005 µm to 10 µm, such as from 0.01 µm to 1.2 µm or from 0.02 µm to 0.45 µm.

Membranes can also be classified based on their pore size. In general, it is distinguished between microporous membranes (pore size of 0.1 to 10 µm), ultraporous membranes (pore size of 0.01 µm to less than 0.1 µm,) and nanoporous membranes (pore size of 0.001 to less than 0.01 µm). According to a preferred embodiment of the present invention, the membrane is a microporous membrane or a ultraporous membrane.

Herein, for determining pore sizes which are equal to or more than 0.1 µm, capillary flow porometry is applied. Capillary flow porometry is a gas-liquid porosimetry technique in which the differential gas pressures and flow rates through a membrane sample are measured first in the wet state and then in the dry state. Before the measurement, the membrane sample is contacted with a wetting liquid such that all pores present are filled with said wetting liquid. Once the pores are filled, the membrane sample is introduced into the measurement cell. After closing the measurement cell and starting the measurement, the gas pressure is increased in an automatic and stepwise manner, and the pore diameters in accordance with the pressure being applied are emptied as a result of the gas pressure. This is done until all the relevant pore sizes have been captured, i.e. until even the smallest pores present in the measurement range have been cleared of the liquid. Thereafter, the pressure is dropped back down, and the measurement is automatically repeated on the now dry membrane sample. From the difference between the two pressure/flow rate curves, the pore size distribution is calculated via the Young-Laplace equation (see also A. Shrestha, "Characterization of porous membranes via porometry", 2012, Mechanical Engineering Graduate Theses & Dissertations, Paper 38, University of Colorado at Boulder).

On the other hand, herein, for determining pore sizes which are less than 0.1 µm, liquid-liquid displacement porosimetry is applied. As known to the skilled person, liquid-liquid displacement porosimetry has similarities to capillary flow porometry. However, it is not the gas flow rates that are measured but rather the flow rates of the liquid which is displaced as a function of the differential pressure increase (see also R. Davila, "Characterization of ultra and nanofiltration commercial filters by liquid-liquid displacement porosimetry", 2013).

The porosity of the membrane is not specifically limited and can be readily chosen by the person skilled in the art depending on the intended use of the membrane and desired specifications thereof. For example, the porosity of a membrane can be 5% to 90%, preferably 40% to 85%. In general, the porosity represents a ratio of the pore volume to the total volume of the membrane. In this context, the total volume of the membrane refers to the volume confined by the first main surface and the second main surface of the membrane. Methods for determining the porosity of a membrane are known to a person skilled in the art, such as the method described in ISO 15901-1 :2016. For example, the porosity of a membrane can be determined based on the thickness, the area of the first and second main surfaces, the weight of the membrane und the density of the material constituting the membrane.

Concerning the thickness of the membrane, the present invention is likewise not subject to any particular limitation. For example, the membrane may have a thickness in the range from 20 µm to 400 µm, preferably in the range from 80 µm to 300 µm. The thickness of the membrane is measured using a commercial film thickness gauge with a scale value of 1 µm (HAHN+KOLB Werkzeuge GmbH, Ludwigsburg, Germany).

In the same way, the geometric shape of the membrane is not further limited.

The membrane of the object, such as a filter, may have a tubular shape. To this end, a membrane which is rectangular in shape may be closed by means of ultrasonic welding. As a result, a cylindrical arrangement with two open end faces is obtained. Each of these two open end faces may be regarded as the peripheral region to be connected to the respective boundary member, e.g., by embedding the peripheral region of the membrane in the boundary member after softening the boundary member. As required, before it is closed to form a tube, the membrane which is rectangular in shape may be pleated. Thereby, the area of the membrane can be increased while the overall size of the geometric shape of the membrane remains the same. In case the object having a membrane is a filter, which comprises a membrane having a tubular shape, which is optionally pleated, it might also be referred to as a filter cartridge. In this case the at least one boundary member is typically an end cap.

Instead of a tubular shape, the membrane may also have a flat shape, which means that the perimeter of the membrane may be regarded as the peripheral region to be connected to the respective boundary member, e.g., by overmolding, hydrophobic gluing, or ultrasonic welding the boundary member to the peripheral region of the membrane. In case the object having a membrane is a filter, which comprises a membrane having a flat shape, it may also be referred to as a flat sheet filter or flat sheet module. In this case, the at least one boundary member is typically a frame.

In case of embedding, for instance, in order to be connected to the peripheral region of the membrane, the boundary member or at least a part thereof must be capable of being softened. For this reason, low-melting thermoplastics are typically used as the material of the boundary member. Low-melting thermoplastics are compatible with the material constituting the membrane so that a fluid-tight connection can be achieved. For example, the at least one boundary member is formed from a polyolefin, among which polyethylene, polypropylene, and polyethylene propylene) may be mentioned, without, however, being limited thereto. In a preferred embodiment, the polyolefin is polypropylene.

The geometric shape of the at least one boundary member is not further limited as long as the peripheral region of the membrane can be connected thereto. A person skilled in the art selects a suitable geometric shape for the at least one boundary member depending on the intended use of the object having a membrane, such as a filter. As a matter of course, the geometric shape of the at least one boundary member needs to be harmonized with the geometric shape of the membrane. In case of two or more boundary members, each boundary member may have an individual geometric shape, if necessary.

As required, apart from the membrane and the at least one boundary member, the object having a membrane, such as a filter, may comprise additional components such as a backflow safeguard and/or a core, for instance. Depending on the intended use of the object having a membrane, such as a filter, a person skilled in the art selects a suitable backflow safeguard and/or a suitable core for the object having a membrane, such as a filter. Besides, the object having a membrane may comprise one or more drainage or support nonwovens as an additional component, which may be arranged on one or on both sides of the membrane. Like the membrane, these one or more drainage or support nonwovens may be pleated.

In step (b) of the method of performing a gas/liquid-based integrity test according to the present invention, the object is arranged in a space for wetting.

Here, arranging the object means positioning the object inside the space. The object is positioned in such a way that the subsequent steps of the method according to the present invention can be carried out. For example, the object can be arranged or positioned in a mounting device located in the space.

The space is not further limited as long as the object having a membrane arranged therein can be wetted and air can be replaced by the water-soluble gas having a solubility in water at a temperature of 293.15 K and a pressure of 101.325 kPa of at least 54 mg/L. Thus, the space is suitable to perform subsequent steps (c) and (d) of the method according to the present invention, preferably all subsequent steps of the method according to the present invention so that the complete method can be performed in the same space.

To do so, the space may be provided inside a fluid tight sealable chamber. To perform the subsequent steps of the method according to the present invention, the chamber may comprise at least one gas inlet and at least one gas outlet, at least one liquid inlet and at least one liquid outlet, a mounting device for holding the object, and at least one pressure measuring device. The mounting device can be provided in the chamber in such a manner as to prevent bypass of any gas or liquid as well as a flow thereof when holding the object having a membrane. For example, an outer circumferential surface of the mounting device may be fluid tight connected to the chamber, and an inner surface of the mounting device may be configured to hold the object and to provide a fluid tight connection to the object.

As required the chamber may comprise at least one means for measuring and controlling the temperature of the space or the gas and liquid located therein. The at least one gas and liquid inlets and gas and liquid outlets can be connected to a device necessary to perform the subsequent steps of the method according to the present invention. For example, each of the at least one gas inlet can be independently connected to at least one source of the water-soluble gas or a component thereof, a source of a pressurized test and reference gas, optionally to a source of a binary-gas for a binary-gas test, or a source of air, while each of the at least one liquid inlet can be independently connected to a source of water or an aqueous solution.

Each of the at least one gas outlet can be independently connected to at least a vacuum pump, an exhaust gas output or a container for gaseous waste, while each of the at least one liquid outlet can be connected to a device for disposal of the water or the aqueous solution or to a liquid pump.

The specific arrangement of the at least one gas inlet, at least one gas outlet, at least one liquid inlet, at least one liquid outlet, the mounting device for holding the object, the at least one pressure measuring device and the at least one means for measuring and controlling the temperature is not limited, as long as the subsequent steps of the method according to the present invention can be carried out. The specific arrangement of the gas and liquid inlets and gas and liquid outlets in the chamber to independently perform wetting as well as testing integrity of the object or using the same chamber are known to a person skilled in the art.

For replacing air in the membrane of step (c) of the method according to the present invention, the at least one source gas inlet connected to a source of the water-soluble gas or a component thereof may be arranged on one side of the chamber relative to the mounting device, while at least one of a gas outlet connected to a vacuum pump and a gas outlet connected to an exhaust gas output or a container for gaseous waste may be arranged on the other side relative to the mounting device.

In step (c) of the method of performing a gas/liquid-based integrity test according to the present invention, air in the membrane is replaced by a water-soluble gas, wherein the water-soluble gas has a solubility in water at a temperature of 293.15 K and a pressure of 101.325 kPa of at least 54 mg/L. Herein, air is understood as atmospheric air. The solubility of the water-soluble gas used in the present invention is at least three-times higher than the solubility of nitrogen (18 mg/L) at a temperature of 293.15 K and a pressure of 101.325 kPa. Since nitrogen is the main component of air (i.e., 78 volume-%), the water-soluble gas has a significantly higher solubility in water than air. That is, the solubility of the water-soluble gas in water is higher than that of air in water.

As a result of step (c), i.e., replacing air by the water-soluble gas, air having a low solubility in water is (substantially) not present in the membrane in the subsequent step (d) of wetting the membrane of the method according to the present invention. Instead, in the membrane merely the water-soluble gas having a higher solubility in water than air is (substantially) present. When wetting the membrane with water or an aqueous solution in the subsequent step (d), only macroscopic and/or microscopic inclusions of said water-soluble gas may initially form. As the inclusions are formed of the water-soluble gas having a higher solubility in water than air, dissolution of the gas of the inclusions in the water or aqueous solution applied in step (d) is increased compared to conventional air inclusions. Based on the increased dissolution of the water-soluble gas, the volume of the inclusions initially formed during wetting of the membrane decreases more significantly compared to air inclusions. Thereby, the inclusions of the water-soluble gas are at least reduced compared to air inclusions or are even removed. Therefore, by replacing air with the water-soluble gas in step (c), wetting of the membrane in step (d) can be improved, since macroscopic gas inclusions, which prevent full wetting of the membrane, and microscopic gas inclusions trapped in pores and/or voids of the membrane material, which prevent complete wetting of the material surrounding said pores and/or voids, are reduced or even removed due to the high solubility of the water-soluble gas in the applied water or aqueous solution. As a result, wetting of the membrane by water or an aqueous solution can be improved. Based on the improved wetting of the membrane, the occurrence of false negative test results in a gas/liquid-based integrity test can be reduced. Accordingly, the total number of gas/liquid-based integrity tests to be carried out is reduced, since there is no need to re-evaluate membranes which have (erroneously) been tested as negative.

In principle, the above-explained effect can be achieved by the replacement of air by any gas having a higher solubility in water. However, the effect is particularly significant at a water-solubility of 54 mg/L or higher at a temperature of 293.15 K and a pressure of 101.325 kPa such that the improved wettability of the membrane has a significant effect on the number of false negative test results.

The water-solubilities of individual gases and methods for determining water-solubilities of gases are known to a person skilled in the art from reference books, for example from CRC Handbook of Chemistry and Physics 95^{th} edition. Based thereon a person skilled in the art can determine the water-solubility of any gas or gas mixture by suitable equations, for example by Dalton's law in combination with Henry's law, using the partial pressure and the water-solubility of each individual gas.

The described effect of improved wetting of the membrane can be further increased by increasing the water-solubility of the water-soluble gas. The solubility of the water-soluble gas at a temperature of 293.15 K and a pressure of 101.325 kPa can be at least an n-fold of the solubility of nitrogen (18 mg/L) - the main component of air - at a temperature of 293.15 K and a pressure of 101.325 kPa, wherein n is an integer of 4 or greater. For example n may be 5, 10, 15, 20, 25, 30, 35, 40, 45, 50, 55, 60, 65, 70, 75, 80, 85 or 90. To improve the wetting of the membrane, the minimum solubility of the water-soluble gas at a temperature of 293.15 K and a pressure of 101.325 kPa can also be selected relative to the solubility of oxygen (46 mg/L) - the second most common component of air having a higher solubility than nitrogen - at a temperature of 293.15 K and a pressure of 101.325 kPa. The lower limit of solubility of the water-soluble gas can be at least an m-fold of the solubility of oxygen, wherein m is an integer of 3 or greater. For example, m may be 3, 5, 10, 15, 20, 25, 30 or 35.

In a preferred embodiment of the present invention, the solubility of the water-soluble gas at a temperature of 293.15 K and a pressure of 101.325 kPa is at least 90 mg/L (5-fold of nitrogen), preferably at least 0.14 g/L (3-fold of oxygen), more preferably at least 0.18 g/L (10-fold of nitrogen), still more preferably at least 0.23 g/L (5-fold of oxygen), yet more preferably at least 0.36 g/L (20-fold of nitrogen), particular preferably at least 0.46 g/L (10-fold of oxygen), and most preferably at least 0.92 g/L (20-fold of oxygen).

The upper limit of the solubility of the water-soluble gas at a temperature of 293.15 K and a pressure of 101.325 kPa is not particularly limited. The solubility of the water-soluble gas at a temperature of 293.15 K and a pressure of 101.325 kPa is limited by the intrinsic solubility of applicable gases. Preferably, the solubility of the water-soluble gas at a temperature of 293.15 K and a pressure of 101.325 kPa is 1.7 g/L or less, or 1.2 g/L or less.

The lower and upper limits of the solubility of the water-soluble gas at a temperature of 293.15 K and a pressure of 101.325 kPa can be combined as desired. For example, the solubility of the water-soluble gas at a temperature of 293.15 K and a pressure of 101.325 kPa may be in ascending order of preference at least 54 mg/L and 1.7 g/L or less, at least 90 mg/L and 1.7 g/L or less, at least 0.14 g/L and 1.7 g/L or less, at least 0.18 g/L and 1.7 g/L or less, at least 0.23 g/L and 1.7 g/L or less, at least 0.36 g/L and 1.7 g/L or less, at least 0.46 g/L and 1.7 g/L or less, at least 0.92 g/L and 1.7 g/L or less, at least 54 mg/L and 1.2 g/L or less, at least 90 mg/L and 1.2 g/L or less, at least 0.14 g/L and 1.2 g/L or less, at least 0.18 g/L and 1.2 g/L or less, at least 0.23 g/L and 1.2 g/L or less, at least 0.36 g/L and 1.2 g/L or less, at least 0.46 g/L and 1.2 g/L or less or at least 0.92 g/L and 1.2 g/L or less.

The water-soluble gas is not particularly limited, as long as it is compatible with the object having a membrane. That is, the water-soluble gas does not react with any component of the object, especially with the material of the membrane. Analogously, upon dissolution in water or an aqueous solution the water-soluble gas does not form a compound reacting with the membrane.

In order to ensure proper functionality of the membrane after performing the integrity test, the water-soluble gas is preferably a gas which evaporates from the membrane after the integrity test without specific measures not commonly applied in or subsequent to a gas/liquid-based integrity test. For example, the water-soluble gas completely evaporates from the object by exposure to air or vacuum, optionally in combination with warming. Therefore, the water-soluble gas preferably does not contain any compounds forming salts when dissolving in water or the aqueous solution applied in step (d).

From an environmental point of view, the water-soluble gas is preferably neither toxic, corrosive nor environmentally hazardous. From a safety point of view, the water-soluble gas is preferably not flammable.

In order not to harm the membrane, the water-soluble gas is preferably substantially free of compounds which form a strong acid or a strong base when dissolved in water. Criteria to evaluate whether an acid or base represents a strong acid or strong base are known to a person skilled in the art. For example any acid or base effectively completely dissociated in solution represents a strong acid or base. Herein, an acid may be considered to represent a strong acid in case it has a pKₛ value of 3.75 or less and a base may be considered to represent a strong base in case it has a pK_{b} value of 4.75 or less. For example, the water-soluble gas is substantially free of nitrogen dioxide, hydrogen iodide, hydrogen bromide, hydrogen chloride, hydrogen fluoride, chlorine, sulfur dioxide, sulfur trioxid and/or ammonia. In general, according to the present invention a water-soluble gas is substantially free of a certain component when the content of the component in the water-soluble gas is less than 100 ppm, preferably such components have a content of less than 10 ppm. The content of said components in the water-soluble gas may also be limited to said values in order not to exceed reasonable rinsing volumes of water, such as water for injection or sterilized water for injection, when rinsing the object having a membrane after performing the integrity test in step (f).

For analogous reasons the water-soluble gas may not be suitable to decrease the pH value of the water or aqueous solution applied in step (d) of the method according to the invention to a value of less than 1.0, preferably less than 5.0 and more preferably less than 6.0, and not suitable to increase the pH value of the water or aqueous solution applied in step (d) to a value of more than 13, preferably more than 9.0 and more preferably more than 8.0.

The water-soluble gas may comprise only one gaseous component or a mixture of at least two gaseous components. The water-soluble gas is not atmospheric air.

In a preferred embodiment according to the present invention, the water-soluble gas comprises at least one gaseous component selected from the group consisting of carbon dioxide, dinitrogen oxide, xenon and krypton. These gaseous components have a higher solubility in water than nitrogen and oxygen constituting about 99 vol.-% of air. Accordingly, the presence of the at least one gaseous compound increases the solubility of the water-soluble gas resulting in improved wetting of the membrane. In order to arrive at a water-soluble gas having a higher solubility in water, the water-soluble gas preferably comprises carbon dioxide and/or dinitrogen oxide, more preferably carbon dioxide. Besides the at least one gaseous component, the water-soluble gas may comprise at least one of nitrogen, oxygen and argon.

The purity of the water-soluble gas is not specifically limited, as long as the membrane is not contaminated during step (c) and its properties are not negatively affected. Preferably, the content of impurities in the water-soluble gas is 10 ppm or less. In this context, the term impurity refers to any component not mentioned as a gaseous component of the water-soluble gas, such as any component different than carbon dioxide, dinitrogen oxide, xenon, krypton, nitrogen, oxygen and argon. In a preferred embodiment of the present invention the water-soluble gas and/or the gaseous components comprised therein complies with the Commission Regulation (EU) No 231/2012 of 9 March 2012 laying down specifications for food additives listed in Annexes II and III to Regulation (EC) No 1333/2008 of the European Parliament and of the Council Text with EEA relevance.

The content of the at least one gaseous component comprised in the water-soluble gas is not particularly limited, as long as the solubility thereof in water at a temperature of 293.15 K and a pressure of 101.325 kPa is at least 54 mg/L.

In a preferred embodiment according to the present invention, the total content of the at least one gaseous component in the water-soluble gas is at least 15 vol.-%.

This content of at least 15 vol.-% refers to the total content of the at least one gaseous component of the water-soluble gas, such as the total content of carbon dioxide, dinitrogen oxide, xenon and krypton in the water-soluble gas. Other components contained in the water-soluble gases may be gases which are not particularly water soluble in the terms defined in this application, such as nitrogen, oxygen and argon. A water-soluble gas comprising at least one of carbon dioxide, dinitrogen oxide, xenon and krypton in a total content of at least 15 vol.-% has a sufficient solubility in water to improve wetting of the membrane and to reduce the number of false negative tests. That is, a water-soluble gas comprising at least 15 vol.-% of at least one gaseous component selected from the group consisting of carbon dioxide, dinitrogen oxide, xenon and krypton has a solubility in water at a temperature of 293.15 K and a pressure of 101.325 kPa of at least 54 mg/L. Such water-soluble gas can be used in step (c) of the method of performing a gas/liquid-based integrity test according to the present invention.

In case solubility of the water-soluble gas should be further increased, the total content of carbon dioxide, dinitrogen oxide, xenon and krypton is preferable at least 25 vol.-%, more preferably at least 50 vol.-%, still more preferably at least 75 vol.-%, yet more preferably at least 90 vol.-%, highly preferably at least 95 vol.-%, particular preferably at least 98 vol.-%, and most preferably at least 99 vol.-%. Thereby the solubility of the water-soluble gas in water at a temperature of 293.15 K and a pressure of 101.325 kPa can be increased to the values higher than 54 mg/L as described above.

In case the water-soluble gas comprises more than one of carbon dioxide, dinitrogen oxide, xenon and krypton as the at least one gaseous component, the content of more expensive gaseous component(s) may be lower than the content of the cheapest comprised gaseous component. Thereby, costs for performing the method of the present invention can be reduced. For example, the content of each of xenon and krypton in the water-soluble gas, if comprised, may be 1 vol.-% or less. Analogously, the content of carbon dioxide in a water-soluble gas, which comprises carbon dioxide and at least one of dinitrogen oxide, xenon and krypton, may be more than 14 vol.-%, preferably more than 24 vol.-%, more preferably more than 49 vol.-%, still more preferably more than 74 vol.-%, yet more preferably more than 89 vol.-%, highly preferably more than 94 vol.-%, particular preferably more than 97 vol.-%, and most preferably more than 98 vol.-%.

The principals and work-flows to provide the water-soluble gas described herein in step (c) of the method according to the invention are known to a person skilled in the art and can be readily modified by a person skilled in the art as required. For example, the composition of the water-soluble gas, especially the content of each of the at least one gaseous component can be controlled by flow meters that are installed at the corresponding gas inlet or at a pipe connecting the gas inlet with a source of the water-soluble gas or a component thereof.

In case the water-soluble gas comprises at least one of carbon dioxide, dinitrogen oxide, xenon and krypton, the upper limit of the total content of said components is not particularly limited. For economic reasons, it might be considered to reduce the amount of expensive gaseous components comprised in the water-soluble gas as well as avoiding the use of highly pure gases. For example, the total content of each of carbon dioxide, dinitrogen oxide, xenon and krypton in the water-soluble gas may be less than 99.9 vol.-%, less than 99.8 vol.-%, less than 99.6 vol.-%, less than 99.5 vol.-%, less than 95 vol.-% or less than 90 vol.-%.

Several methods for replacing air in the membrane by the water-soluble gas are known to a person skilled in the art and the method applied in step (c) is not particularly limited. Here, replacing air by a water-soluble gas refers to exchanging air with a water-soluble gas. Air or any gas in the membrane refers to the gas located on the surface of materials of the membrane and between the materials of the membrane as well as located in the pores and/or voids of the membrane. As the membrane is arranged in a space for wetting in step (b), the step of replacing air in the membrane by the water-soluble gas is achieved by a step of replacing air by the water-soluble gas in the space in which the object is arranged.

When the replacement of air by the water-soluble gas is not complete, a gas mixture of air and the water-soluble gas will be present in the membrane and in the space. That is, the degree of replacement of air by the water-soluble gas is not 100%. In this case, the gas mixtures in the membrane and in the space are considered as being identical. Although not complete, replacement of air by the water-soluble gas in the membrane to a certain extent is usually sufficient for improving wetting of the membrane in the method according to the present invention. As complete replacement of air in the membrane is technically complex and time consuming, air may only be replaced to a certain extent.

For example, in step (c) air may be replaced by the water-soluble gas by at least 50%, preferably at least 60%, more preferably at least 70%, still more preferably at least 80%, particularly preferable at least 90%, and most preferably at least 95%. The degree of replacement of air by the water-soluble gas can be measured and controlled by determining the composition of the gas mixture present in the space in which the object is arranged and calculation of the degree of replacement based on the composition of air and the water-soluble gas.

Alternatively, in step (c) air may be replaced in the membrane by the water-soluble gas to such an extent, that the obtained gas mixture of the water-soluble gas and air in the membrane has a solubility in water sufficient to improve wetting of the membrane by water or an aqueous solution in step (d). That is, the effect of the method of performing a gas/liquid-based integrity test according to the present invention occurs independently of the degree of replacement of air in the membrane in step (c) and the solubility of the water-soluble gas at a temperature of 293.15 K and a pressure of 101.325 kPa, if the gas mixture of the water-soluble gas and air in the membrane obtained in step (c) has a certain solubility in water. In principle, the above-explained effect can be achieved by a gas mixture of the water-soluble gas and air in the membrane having a higher solubility in water compared to air. The effect is particularly significant at a water-solubility of the gas mixture of the water-soluble gas and air, of 54 mg/L or higher at a temperature of 293.15 K and a pressure of 101.325 kPa such that the improved wettability of the membrane has a significant effect on the number of false negative test results.

To further improve wetting of the membrane, the water-solubility of the gas mixture obtained in step (c) can be increased. The values, ranges and limitations of the solubility as well as the specifications and compositions of the water-soluble gas itself as described herein, analogously apply to the water-solubility gas mixture of the water-soluble gas and air in the membrane obtained in step (c). That is, in a preferred embodiment the solubility of the gas mixture of the water-soluble gas and air at a temperature of 293.15 K and a pressure of 101.325 kPa is at least 90 mg/L, preferably at least 0.14 g/L, more preferably at least 0.18 g/L, still more preferably at least 0.23 g/L, yet more preferably at least 0.36 g/L, particular preferably at least 0.46 g/L, and most preferably at least 0.92 g/L. The upper limit of the solubility of the gas mixture of the water-soluble gas and air at a temperature of 293.15 K and a pressure of 101.325 kPa is not particularly limited, but may be 1.7 g/L or less, or 1.2 g/L or less.

In another preferred embodiment, the gas mixture obtained in step (c) comprises carbon dioxide, dinitrogen oxide, xenon and krypton in a total content of at least 15 vol.-%. Such a gas mixture has a solubility in water at a temperature of 293.15 K and a pressure of 101.325 kPa of at least 54 mg/L. In case solubility of the gas mixture obtained in step (c) should be further increased, the total content of carbon dioxide, dinitrogen oxide, xenon and krypton is preferable at least 25 vol.-%, more preferably at least 50 vol.-%, still more preferably at least 75 vol.-%, yet more preferably at least 90 vol.-%, highly preferably at least 95 vol.-%, particular preferably at least 98 vol.-%, and most preferably at least 99 vol.-%.

It is apparent that the water-solubility of the gas mixture of the water-soluble gas and air obtained in step (c) is only identical to the water-solubility of the water-soluble gas itself, in case the degree of replacement of air in step (c) is 100%. In all other cases the water-solubility of the gas mixture obtained in step (c) is lower than that of the applied water-soluble gas. The water-solubility of the gas mixture of the water-soluble gas and air obtained in step (c) can be increased by increasing the degree of replacement of air and/or the water-solubility of the water-soluble gas.

The water-solubility of the gas mixture of the water-soluble gas and air obtained in step (c) can be determined or calculated analogous to the methods described in the context of the water-solubility of the water-soluble gas. For example, the water-solubility of the gas mixture obtained in step (c) can be calculated based on the partial pressures of the individual gases using Dalton's law in combination with Henry's law and known water-solubilities of gases and methods for determining water-solubilities of gases of reference books, for example of CRC Handbook of Chemistry and Physics 95^{th} edition.

Air can be replaced in the membrane by removing it by vacuum and adding the water-soluble gas or by displacing it with the water-soluble gas.

In a preferred embodiment of the method according to the present invention, step (c) comprises at least one cycle of step (c1): removing air from the space by applying vacuum, and step (c2): subsequently filling the vacuumized space with the water-soluble gas.

By said at least one cycle, air can sufficiently be replaced in the membrane by removing it by applying vacuum and afterwards adding the water-soluble gas. Here, the term vacuum does not refer to a perfect vacuum but to reduced pressure.

In step (c1), the pressure inside the space is reduced by applying vacuum. By reducing the pressure inside the space, the air or an air/water-soluble gas mixture inside the space is at least partially removed and replacement of air can be improved by subsequent filling of the vacuumized space with the water-soluble gas in step (c2). Here, the vacuumized space refers to the space after applying vacuum thereto. This vacuumized space has a reduced pressure compared to atmospheric pressure. The final reduced pressure of the space achieved by applying vacuum is not particularly limited. For example, after applying vacuum the pressure inside the space may be less than 200 mbar, preferably less than 20 mbar, more preferably less than 2 mbar.

For step (c2), filling the vacuumized space with the water-soluble gas refers to the addition of the water-soluble gas to increase the pressure inside the space. Preferably, the water-soluble gas is added until atmospheric pressure is reached inside the space, wherein atmospheric pressure refers to the standard pressure at sea-level of 1.013 bar (101.3 kPa). Here, pressure inside the space and pressure of the space refer to the pressure of the gas located inside the space.

In the context of the present invention, pressure means the pressure of a gas, for example air, the water-soluble gas or a mixture thereof, or a liquid, for example water or an aqueous solution, which is a measure of the average linear momentum of the moving molecules of the gas or liquid. A gas or liquid pressure may be applied to one side of the membrane or to two sides of the membrane. Here, applying a gas or liquid pressure to a side of the membrane means that a side of the membrane is brought into contact with a gas or liquid having a pressure higher than atmospheric pressure. The side of a membrane means a main surface of the membrane.

The cycle of steps (c1) and (c2) can be repeated several times until the desired degree of replacement is reached. For example, the cycle can be repeated twice, three-times or four-times, preferably three-times.

In case air in the membrane is removed by the at last one cycle of steps (c1) and (c2), the space may be provided inside a fluid tight sealable chamber comprising a mounting device, at least one gas inlet connected to at least one source of the water-soluble gas or a component thereof and at least one gas outlet connected to at least one vacuum pump. The at last one gas inlet and the at least one gas outlet can be provided in the chamber on the same or different sides relative to the mounting device.

In a preferred embodiment of the method according to the present invention, step (c) comprises displacing air by a flow of the water-soluble gas through the membrane. Here, displacing refers to a process of putting air out of place by the water-soluble gas and moving air out of the membrane by the flow. Or in other words, when displacing air by a flow of the water-soluble gas through the membrane, air is pushed out from the membrane by the flow of the water-soluble gas through the membrane. The flow of the water-soluble gas is a fluid flow, preferably a laminar fluid flow. The flow can be quantified by its volumetric flow rate, which represents the volume of the water-soluble gas which passes per unit time. When air is displaced by a flow of the water-soluble gas the volumetric flow rate is not specifically limited. An increased volumetric flow rate increases the degree of replacement. For example, a volumetric flow rate sufficient for a suitable replacement can be achieved when passing a volume of the water-soluble gas corresponding to the 2-fold, preferably, the 3-fold, and more preferably the 5-fold volume of the space in which the object is arranged within 5 minutes, preferably 2 minutes through the membrane and said chamber.

The volume of the water-soluble gas flowing through the membrane can be provided by adding the water-soluble gas into the space in an area facing one side of the membrane and generating a pressure difference over the space.

Within the present application, pressure difference of a gas over the space means that a gas, for example the water-soluble gas, air or a mixture thereof, in contact with one side of the membrane has a different pressure than the gas in contact with the opposite side of the membrane.

Said pressure difference can be generated by adding the water-soluble gas under pressure to the space in an area facing one side of the membrane and releasing or reducing the pressure in an area of the space facing the opposite side of the membrane. Alternatively, the pressure difference can be generated by adding the water-soluble gas to the space in an area facing one side of the membrane and reducing the pressure by a vacuum pump of the space in an area facing the opposite side of the membrane. Herein, releasing the pressure in an area of the space facing the opposite side of the membrane means that in this area the pressure is lowered by allowing air, the water-soluble gas or a mixture thereof to flow out of the space in which the object is arranged, for example into a space having a lower pressure than the space in which the object is arranged, such as the environment having atmospheric pressure. Reducing the pressure in an area of the space facing the opposite side of the membrane means that in this area the pressure is actively lowered, for example by a (vacuum) pump.

The pressure difference is not specifically limited, as long as the object having a membrane, such as a filter, is not damaged. Therefore, the pressure difference can be adjusted depending on the maximum allowable working pressure of the object having a membrane, for example a filter. For example, the pressure difference may be 20% of the maximum allowable working pressure and preferably 40% of the maximum allowable working pressure. The upper limit of the pressure difference is the maximum allowable working pressure, preferably 90% of the maximum allowable working pressure.

Herein, the maximum allowable working pressure refers to the maximum pressure that the weakest component of the object having a membrane can withstand. In case the object having a membrane is a filter, the maximum allowable working pressure correspond to its highest operating pressure, which depends on its geometry and materials and is typically given by the manufacturer.

In case air in the membrane is removed by displacement by a flow of the water-soluble gas through the membrane, the space may be provided inside a fluid tight sealable chamber comprising a mounting device, at least one gas inlet connected to at least one source of the water-soluble gas or a component thereof and at least one gas outlet connected to a vacuum pump, an exhaust gas output or a container for gaseous waste.

The at least one gas inlet and the at least one gas outlet can be provided in the chamber on different sides relative to the mounting device. Arrangement of the at last one gas inlet and the at least one gas outlet on different sides relative to the mounting device results in a flow of the water-soluble gas through the membrane, thereby efficiently displacing air. The mounting device can be provided in the chamber in such a manner as to prevent bypass of the flow when holding the object having a membrane. For example, an outer circumferential surface of the mounting device may be fluid tight connected to the chamber, and an inner surface of the mounting device may be configured to hold the object and to provide a fluid tight connection to the object. When displacing air by a flow of the water-soluble gas, at least a part of one main surface of the membrane may be arranged in a position vertical to the flow.

After replacing air in the membrane by the water-soluble gas and before wetting the membrane with water or an aqueous solution in step (d), the object having a membrane preferably does not get into contact with air or another gas having a lower water solubility as the water-soluble gas. Otherwise, the water-soluble gas located in the membrane, especially in the voids and grooves of the membrane, will be diluted or completely removed and wetting of the membrane in step (d) will not be improved to the same extent. Therefore, there is preferably no additional step between steps (c) and (d) and steps (c) and (d) are carried out in the same space. That is, after step (c), the object is not removed from the space and before step (d), a gas different than the water-soluble gas is not added to the space in which the object is arranged.

In step (d) of the method of performing a gas/liquid-based integrity test according to the present invention, the membrane of the object is wetted with water or an aqueous solution.

Wetting of the membrane with water or an aqueous solution corresponds to a step of moistening the surface of the membrane with water or an aqueous solution. By said step of wetting the membrane, a liquid layer across the membrane is provided. Additionally, by wetting the membrane, any gas inside the membrane, especially in voids and grooves of the membrane, is preferably displaced by water or the aqueous solution. As modern filters, which represent a specific object having a membrane, usually have complex geometries of stacked or folded membrane and supporting layers, it is also important to displace gas from folds, bends, stacks of membrane material.

The time for wetting the membrane with water or an aqueous solution is not specifically limited as long as the membrane is sufficiently wetted to reduce the occurrence of false negative test results in integrity tests relying on a liquid film provided in and on the membrane. For economic reasons, it might be considered to limit the time for wetting, to less than 30 minutes and preferably to less than 5 minutes, in order to increase the numbers of wetted objects.

The aqueous solution is based on water and may comprise at least one additive. Such an additive can improve wetting of the membrane. For example, wetting of the membrane can be improved by an additive which lowers the surface tension of water. Different additives improving wetting of the membrane and compositions of the aqueous solution comprising the at least one additive are known to a person skilled in the art. For example, at least one additive selected from the group consisting of glycerin and alcohols, such as isopropanol or ethanol, may be added. Certain additives may potentially lead to explosive atmospheres and/or may contaminate the water, hence an aqueous solution comprising the same must be disposed separately. To avoid any potential explosive atmosphere and/or costly disposal of contaminated water, the aqueous solution preferably does not contain glycerin, polyvinylpyrrolidone or an alcohol, such as isopropanol and ethanol. The aqueous solution is based on water and has a water content of at least 90% by mass, preferably at least 95% by mass, more preferably at least 98% by mass and particularly preferred at least 99 % by mass.

Any solid or salt contained in the water or aqueous solution applied in step (d) may remain in the membrane after carrying out the integrity test and may deteriorate performance of the membrane, e.g., by blocking pores of the membrane. Such performance deterioration of the membrane should particularly be avoided when testing integrity of the object before its intended use, i.e., the pre-use test. Therefore, the content of solids and salts in the water or aqueous solution should be low. For example, the content of solids and salts can be evaluated by the total dry residue of the water or aqueous solution. Said less total dry residue of the water or aqueous solution may be less than 10 mg/L, preferably less than 7 mg/L, more preferably less than 5 mg/L, particularly preferably less than 3 mg/L, most preferably less than 2 mg/L. The total dry residue of water and the aqueous solution is determined according to DIN 38409 H1-1.

In order to avoid the formation of any solid or salt in the water or aqueous solution during wetting of the membrane, the water or aqueous solution does preferably not contain any additional compound that reacts with a gaseous component of the water-soluble gas or another compound formed by a dissolved component of the water-soluble gas. Here, water itself is not considered as such an additional compound that reacts with a gaseous component of the water-soluble gas or another compound formed by a dissolved component of the water-soluble gas. For example, the water or aqueous solution does preferably not comprise a component that reacts with carbonic acid formed by dissolving carbon dioxide in water. That is, the water or aqueous solution does preferably not contain any hydroxides or amines.

In a preferred embodiment of the method of performing a gas/liquid-based integrity test according to the present invention, (pure) water is used in step (d).

When using (pure) water in step (d), an object having a membrane, such as a filter, can be integrity tested by the method according to the present invention and can subsequently be applied in a process which requires special water purity standards. That is, the method of the present invention can be carried out as a pre-use test and the tested objected having a membrane, such as a filter, can be used without any additional steps, such as purification. For this purpose, preferably pure water is applied in step (d).

Herein, the term pure water refers to any water meeting the specification for water for injection or sterilized water for injection. For example, pure water applied in step (d) is water for injection or sterilized water for injection as set out in European Pharmacopoeia 11.4, 04/2024:0169. The water for injections has a maximum total organic carbon content of 0.5 mg/L, a maximum conductivity of 2.1 µS·cm⁻¹ at 25±1 °C, a bacterial endotoxin content of less than 0.25 IU/mL, and optionally a maximum aluminum content of 10 ppb. The sterilized water for injections has a maximum conductivity of 5 µS·cm⁻¹ at 25±1°C, maximum residue on evaporation of 0.003%, a bacterial endotoxin content of less than 0.25 IU/mL, and optionally a maximum aluminum content of 10 ppb, and passes the potassium permanganate test for oxidisable substances as well as the test for sub-visible particles.

Different measures for wetting the membrane in step (d) of the method of performing a gas/liquid-based integrity test according to the present invention are known to the person skilled in the art and the method is not particularly limited. The measures are based on surrounding the membrane by water or the aqueous solution in the space for wetting. For example, the step of wetting the membrane can comprise at least one step of filling the space in which the object is arranged with the water or the aqueous solution, and preferably providing a water or aqueous solution flow through the membrane.

For the step of wetting the membrane, the space in which the object is arranged may be provided inside a fluid tight sealable chamber comprising a mounting device, at least one gas outlet connected to a vacuum pump, an exhaust gas output or a container for gaseous waste, at least one liquid inlet connected to a source of water or an aqueous solution, and at least one liquid outlet connected to a device for disposal of the water or the aqueous solution or to a liquid pump. In case the step of wetting comprises the step of filling the space in which the object is arranged with the water or the aqueous solution, the arrangement of the mounting device, the at least one gas outlet, the at least one liquid inlet, and the at least one liquid outlet are not particularly limited, as long as any component is suitably arranged to perform its function. For example, the at least one gas outlet can be provided at the highest point of the chamber.

Step (d) of the method according to the present invention preferably comprises providing a flow of the water or aqueous solution through the membrane. By providing a flow of water or the aqueous solution through the membrane, wetting of the membrane is improved compared to merely filling the space with water or the aqueous solution. The flow of water or the aqueous solution is a fluid flow, preferably a laminar fluid flow.

The flow of water or the aqueous solution through the membrane can be provided by adding the water or aqueous solution into the space in an area facing one side of the membrane and generating a pressure difference over the space.

Within the present application, pressure difference of the water or the aqueous solution over the space means that the water or the aqueous solution in contact with one side of the membrane has a different pressure than the water or the aqueous solution in contact with the opposite side of the membrane and the pressure difference is the difference between both pressures. The pressure difference is not specifically limited, as long as the object having a membrane, such as a filter, is not damaged. Therefore, the pressure difference can be adjusted depending on the maximum allowable working pressure of the object having a membrane, for example a filter. For example, the pressure difference may be 20% of the maximum allowable working pressure and preferably 40% of the maximum allowable working pressure. The upper limit of the pressure difference is the maximum allowable working pressure, preferably 90% of the maximum allowable working pressure.

Said pressure difference can be generated by adding the water or aqueous solution under pressure to the space in an area facing one side of the membrane and draining the water or aqueous solution from the space in an area facing the opposite side of the membrane. Alternatively, the pressure difference can be generated by adding the water or aqueous solution to the space in an area facing one side of the membrane and pumping the water or aqueous solution out of the space in an area facing the opposite side of the membrane. Additionally, the water or aqueous solution can be added under pressure to the space in an area facing one side of the membrane, and the water or aqueous solution can be pumped out of the space in an area facing the opposite side of the membrane to increase the pressure difference.

The at least one gas outlet can be provided at the highest point of the chamber. Thereby, the water-soluble gas can easily be displaced by the water or aqueous solution inside the space. The at least one gas outlet may also serve as a liquid outlet. The at least one liquid inlet and the at least one liquid outlet can be provided in the chamber on different sides relative to the mounting device. An arrangement of the at least one liquid inlet and the at least one liquid outlet on different sides of the chamber relative to the mounting device results in a flow of the water or aqueous solution through the membrane, thereby efficiently wetting the membrane. The mounting device can be provided in the chamber in such a manner as to prevent bypass of the water or aqueous solution flow when holding the object having a membrane. For example, an outer circumferential surface of the mounting device may be fluid tight connected to the chamber, and an inner surface of the mounting device is configured to hold the object and to provide a fluid tight connection to the object. Thereby, the flow through the membrane can be improved. When wetting the membrane by a flow of water or the aqueous solution, at least a part of one main surface of the membrane may be arranged in a position vertical to the flow.

In step (d), wetting of the membrane can be further improved by several measures. For example, wetting can be improved by introducing back pressure or by increasing the flow of water or the aqueous solution through the membrane. Additionally, wetting of the membrane can be further increased by increasing the wet time, using a wetting agent such as glycerin and polyvinylpyrrolidone, adding wetting fluids such as alcohol, either isopropyl or an ethanol-based alcohol. These measures can be carried by a person skilled in the art without specific guidance.

Wetting of the membrane can be further improved by decreasing in step (d) the temperature of the water and/or by performing step (d) at a pressure higher than atmospheric air. Decreasing the temperature and performing the step (d) at a pressure higher than atmospheric air can be carried out individually or in combination.

In a preferred embodiment of the method of performing a gas/liquid-based integrity test according to the present invention, step (d) is performed at a temperature of less than 20°C. The temperature refers to the temperature of the water or aqueous solution in the space in which the object having a membrane is arranged, i.e., to the water or aqueous solution surrounding the object having a membrane. As the solubilities of gases increase with a lower temperature of water or the aqueous solution, solubility of the water-soluble gas can be improved by performing step (d) at a temperature of less than 20°C. By improving the solubility of the water-soluble gas, wetting of the membrane is further improved. Specifically, the more the water-soluble gas of macroscopic and microscopic inclusions in the membrane dissolves in the water or aqueous solution applied in step (d), the more are the inclusions reduced. Additionally, when performing step (d) at a temperature of less than 20°C, wetting is also accelerated.

As solubility of the water-soluble gas, and hence wetting of the membrane, is further improved and wetting is accelerated at lower temperatures, the temperature in step (d) can be even further lowered. For example, step (d) may be performed at a temperature of less than 15°C, preferably at less than 10°C, and particularly preferable at less than 5°C.

The lower limit of the temperature of the water or aqueous solution is limited to above 0°C to avoid freezing of water or the aqueous solution during step (d). Therefore, in step (d), the temperature may be more than 0°C and less than 20°C, preferably more than 0°C and less than 15°C, more preferably more than 0°C and less than 10°C, and particularly preferable more than 0°C and less than 5°C.

In a preferred embodiment of the method of performing a gas/liquid-based integrity test according to the present invention, the temperature is decreased in step (d) to less than 20°C while wetting the membrane. Here the temperature refers to the final temperature of the water or aqueous solution in step (d). The starting temperature of the water or aqueous solution when starting step (d) is not particularly limited. For example, the starting temperature may be ambient temperature which is understood herein as a temperature of 25°C.

In step (d), the final temperature might be further decreased to further improve solubility of the water-soluble gas and to further accelerate wetting. For example, in step (d), the temperature may be decreased to less than 15°C, preferably to less than 10°C, and particularly preferable to less than 5°C.

The temperature cannot be decreased to 0°C or less as water starts freezing at this temperature. Therefore, in step (d), the temperature may not be decreased to a temperature of 0°C or less. That is, in step (d), the temperature may be decreased to more than 0°C and less than 20°C, preferably to more than 0°C and less than 15°C, more preferably to more than 0°C and less than 10°C, and particularly preferable to more than 0°C and less than 5°C.

In case the method of performing a gas/liquid-based integrity test according to the present invention is performed at a temperature of less than 20°C, or in step (d), the temperature is decreased to less than 20°C while wetting the membrane, the space in which the object is arranged may be provided inside a fluid tight sealable chamber comprising at least one means for measuring the temperature of the water or aqueous solution and/or at least one means for controlling the temperature of the water or aqueous solution. Different means for these purposes are known to a person skilled in the art and are not particularly limited.

In a preferred embodiment of the method of performing a gas/liquid-based integrity test according to the present invention, step (d) is performed at a pressure higher than atmospheric pressure. Here, the pressure refers to the highest pressure of the water or aqueous solution inside the space for wetting the membrane, i.e., of the water or aqueous solution surrounding the object having a membrane.

The solubilities of gases in liquids generally depend on the applied pressure. In general, solubilities of gases increase with an increasing pressure. Accordingly, solubility of the water-soluble gas in the water or aqueous solution applied in step (d) can be further improved when increasing the pressure of the water or aqueous solution inside the space for wetting. In addition, applying a pressure higher than atmospheric pressure also accelerates wetting.

For example, step (d) may be performed at a pressure of 0.2 bar or more above atmospheric pressure, preferably at a pressure of 0.5 bar or more above atmospheric pressure, more preferably at a pressure of 1 bar or more above atmospheric pressure, yet more preferably at a pressure of 2 bar or more above atmospheric pressure and particularly preferably at a pressure of 3 bar or more above atmospheric pressure. Here the pressure refers to the pressure of the water or aqueous solution and the atmospheric pressure refers to the standard pressure at sea-level of 1.013 bar (101.3 kPa). That is, step (d) may be performed at a pressure of 1.213 bar (121.3 kPa) or more, preferably at a pressure of 1.513 bar (151.3 kPa) or more, preferably at a pressure of 2.013 bar (201.3 kPa) or more, more preferably at a pressure of 3.013 bar (301.3 kPa) or more and particularly preferably at a pressure of 4.013 bar (401.3 kPa) or more.

The upper limit of the pressure of the water or aqueous solution inside the space for wetting is not particularly limited, and may only be limited by the pressure the chamber and the object having a membrane can withstand.

Therefore, the pressure of the water or aqueous solution inside the space for wetting can be adjusted depending on the maximum allowable working pressure of the object having a membrane, for example of a filter. For example, the upper limit of the pressure may be the maximum allowable working pressure or less, preferably 90% of the maximum allowable working pressure or less, and more preferably 80% of the maximum allowable working pressure or less. Specific examples of the upper limit of the pressure of the water or aqueous solution inside the space for wetting are 20 bar or less, preferably 15 bar or less, more preferably 10 bar or less and particularly preferably 5 bar or less.

The upper and lower limits of the pressure of the water or aqueous solution in step (d) can be combined as desired. For example, the pressure of the water or aqueous solution may be 1.213 bar or more and 20 bar or less, and preferably 2.013 bar or more and 10 bar or less, more preferably 3.013 bar or more and 10 bar or less, and particularly preferably 4.013 bar or more and 5 bar or less.

In a preferred embodiment of the method of performing a gas/liquid-based integrity test according to the present invention, in step (d) the pressure is increased while wetting the membrane.

Here, the pressure refers to the highest pressure of the water or aqueous solution inside the space for wetting the membrane, i.e., of the water or aqueous solution surrounding the object having a membrane, at a certain time. The pressure can be increased stepwise and/or continuously. If the pressure is increased stepwise, the pressure may be increased by 1 kPa (10 mbar) or less per step, or by 0.2 kPa (2 mbar) or more and 5 kPa (50 mbar) or less per step. The starting pressure of water or aqueous solution for wetting in step (d) is not particularly limited. For example, the starting pressure may be atmospheric pressure, i.e., 1.013 bar (101.3 kPa).

By increasing the pressure of the water or aqueous solution, solubility of the water-soluble gas in the same is increased. Thereby, wetting of the membrane is further improved and accelerated. When increasing the pressure of the water or aqueous solution in step (d), the pressure may be increased to 0.2 bar or more above atmospheric pressure, preferably to a pressure of 0.5 bar or more above atmospheric pressure, more preferably to a pressure of 1 bar or more above atmospheric pressure, yet more preferably to a pressure of 2 bar or more above atmospheric pressure and particularly preferably to a pressure of 3 bar or more above atmospheric pressure. Here the pressure refers to the pressure of the water or aqueous solution and the atmospheric pressure refers to the standard pressure at sea-level of 1.013 bar (101.3 kPa). That is, when increasing the pressure of the water or aqueous solution in step (d), the pressure may be increased to 1.213 bar (121.3 kPa) or more, preferably to 1.513 bar (151.3 kPa) or more, more preferably to 2.013 bar (201.3 kPa) or more, yet more preferably to 3.013 bar (301.3 kPa) or more, and particularly preferably to 4.013 bar (401.3 kPa) or more. Here, the value refers to the final pressure reached in step (d).

When increasing the pressure in step (d), the upper limit of the pressure of the water or aqueous solution inside the space for wetting is not particularly limited, and may only be limited by the pressure the chamber and the object having a membrane can withstand. For example, the pressure can be adjusted depending on the maximum allowable working pressure of the object having a membrane, for example a filter. For example, the upper limit of the pressure may be the maximum allowable working pressure or less, preferably 90% of the maximum allowable working pressure or less, and more preferably 80% of the maximum allowable working pressure or less. Specific examples of the upper limit of the final pressure are 20 bar or less, preferably 15 bar or less, more preferably 10 bar or less and particularly preferably 5 bar or less.

The upper and lower limits of the increased pressure, i.e. the final pressure, of the water or aqueous solution in step (d) can be combined as desired. For example, the pressure of the water or aqueous solution may be increased to 1.213 bar or more and 20 bar or less, preferably 2.013 bar or more and 15 bar or less, more preferably 3.013 bar or more and 10 bar or less, and particularly preferably 4.013 bar or more and 5 bar or less.

In case the method of performing a gas/liquid-based integrity test according to the present invention is performed at a pressure higher than atmospheric pressure or the pressure is increased while wetting the membrane, the pressure can be measured and adjusted by a person skilled in the art by known means. For example, the pressure may be controlled by adding the water or aqueous solution at the desired pressure. Additionally, the fluid tight sealable chamber, in which the space with the object having a membrane is arranged in, may be provided with at least one pressure measuring device.

In step (e) of the method of performing a gas/liquid-based integrity test according to the present invention, a gas pressure is applied to at least one side of the membrane.

In the context of the present invention, gas pressure means the pressure of a gas, which is a measure of the average linear momentum of the moving molecules of a gas. A gas pressure is applied to one side of the membrane or to two sides of the membrane. Here, applying a gas pressure to a side of the membrane means that a side of the membrane is brought into contact with a gas having a pressure higher than atmospheric pressure. The side of a membrane means a main surface of the membrane.

In case a gas pressure is applied to one side of the membrane, this side is referred to as the test side and the gas in contact therewith is referred to as test gas. In case the membrane has a sterile side and a non-sterile side, the gas pressure is preferably applied to the non-sterile side. The side opposite of the test side is referred to as reference side and the gas in contact therewith is referred to as reference gas. The pressure of the reference gas may be atmospheric pressure or lower than atmospheric pressure. The reference gas may be the same or different than the test gas and can be selected as required, i.e., depending on the method for testing integrity in step (f).

In case a gas pressure is applied to two sides of the membrane, the side the higher pressure is applied to is also referred to as test side, while the opposite side is referred to as reference side or *vice versa.* The test side is in contact with the test gas, while the reference side is in contact with the reference gas. The same or different gas pressures can be applied to the test side and the reference side, preferably different pressures are applied. When applying different pressures to the test side and the reference side a pressure difference is generated. Here, pressure difference means that a gas in contact with one side of the membrane has a different pressure than the gas in contact with the opposite side of the membrane. The test side and the reference side may be in contact with the same gas or with different gases, depending on the method for testing integrity in step (f).

The applied pressure and the pressure difference are not particularly limited and depend on the stability of the membrane and the integrity test carried out in step (f). Suitable values of the pressure applied to one or two sides of the membrane as well as the pressure difference are known to a person skilled in the art. For example, the gas pressure applied to a side of the membrane/the pressure difference may be 10 kPa to 500 kPa, preferably 100 to 500 kPa.

The test gas and the reference gas are not particularly limited. The used gases depend on the method for testing integrity in step (f). Suitable gases are known to a person skilled in the art and can be selected as desired. For example, in case a binary gas test is applied, the test gas may be a mixture of carbon dioxide and C₂F₆, while the reference gas may be - irrespective whether a gas pressure is applied to the reference side - air, nitrogen, helium and/or argon. In case a method for testing integrity different than a binary gas test is carried out, the test gas and the reference gas can each independently be selected from the group consisting of air, sterile air, and nitrogen. Here, sterile air refers to air which is obtained by filtration through a sterilizing grade filter according to ASTM F838-20.

When applying gas pressure to at least one side of the membrane, the mounting device is provided in the chamber, in which the space is provided, in such a manner as to prevent bypass of the flow when holding the object having a membrane. For example, an outer circumferential surface of the mounting device may be fluid tight connected to the chamber, and an inner surface of the mounting device may be configured to hold the object and to provide a fluid tight connection to the object. For applying gas pressure to at least one side on the membrane in step (e), preferably the same space, that is the same chamber, as is in previous steps (a) to (d) is used. Or in other words, between steps (d) and (e) the object having a membrane is not transferred into another space or chamber. Accordingly, the chamber described for steps (a) to (d) may comprise at least one additional gas inlet connected to a source of the test gas, at least one additional gas inlet connected to a source of the reference gas and at least one gas outlet as required. In this case the at least one gas inlet connected to a source of the test gas, the at least one additional gas inlet connected a source of the reference gas are provided in the chamber on different sides relative to the mounting device, while at least one gas outlet is arranged at one side of the chamber relative to the mounting device or at each of both sides. Once a gas pressure is applied to at least one side of the membrane in step (e), the subsequent step (f) is carried out in the same space.

In step (f) of the method of performing a gas/liquid-based integrity test according to the present invention, integrity of the object having a membrane is tested.

Here, testing integrity of the object means that it is evaluated whether the object having a membrane, especially the membrane thereof, performs as required or it is detected whether oversized pores or defects are present. In case the object is a filter, testing integrity additionally includes to evaluate whether the filter's retention capacity is affected.

The method for testing integrity is not particularly limited and can be selected by a person skilled in the art as required. The specific method can be selected depending on the membrane to be tested as well as the intended use of the object comprising the membrane, such as a filter.

In a preferred embodiment of the method of performing a gas/liquid-based integrity test according to the present invention, step (f) comprises performing at least one of a gas-liquid diffusion test, a bubble-point test and a binary-gas test.

When performing at least one of a gas-liquid diffusion test, a bubble-point test and a binary-gas test, any step already performed in steps (a) to (e) is not repeated. That is, performing at least one of a gas-liquid diffusion test, a bubble-point test and a binary-gas test is to be understood as completing the respective test based on steps (a) to (e) already performed. Or in other words, performing at least one of a gas-liquid diffusion test, a bubble-point test and a binary-gas test refers to performing the steps of the at least one test necessary to collect data based on which integrity of the object is evaluated as well as evaluating integrity of the object and/or filter.

The gas-liquid diffusion test, the bubble-point test and/or the binary-gas test can be performed by a person skilled in the art without further guidance. Nevertheless, the principles of each test are briefly described in the following, based on which a person skilled in the art can perform any measures essential to perform these tests.

A wetted membrane provides a liquid layer across which a diffusive gas flow occurs, as expressed with Fick's law of diffusion. The gas diffusion flow rate of a membrane is proportional to the differential pressure and the total surface area of the membrane. In the gas-liquid diffusion test the gas pressure on one side of the membrane is increased and the diffusive flow increases linearly until either the liquid layer begins to thin or until a bubble point, where robust bulk air flow commences, is reached. A pass or fail of the filter by the gas-liquid diffusion test is measured with automated test equipment with oversized pores or defects of the filter being recognized by an increase in flow values beyond a validated maximum.

In the bubble point test, an air or nitrogen pressure is incrementally applied to the wetted membrane, and a gas flow across the membrane at each pressure stage is measured. As the pressure increases it will reach a point at which it exceeds the capillary forces of the largest pores in the membrane. By an automated test equipment the increase in air flow as the wetting liquid is expelled and bulk gas flow occurs is measured. The measured value corresponds to the bubble point, which is defined as the pressure at which the flow transitions from diffusive flow through the wetting liquid in the pores to bulk flow through the pores. Based on the determined bubble point, a pass or fail of the tested membrane is evaluated when comparing the determined value to known literature values for the membrane or filter.

In the binary-gas test, a binary gas mixture is used and the test is based on the principle of differing gas permeabilities through the liquid layer of a wetted membrane that results in a concentration enhancement of the faster permeating gas. In an integral membrane, the permeate composition can be predicted based on the transport properties of the gases permeating through the liquid layer and the known operating conditions. A deviation from the expected concentration is an indication of the presence of a defect or oversized pores. Particularly, in an integral membrane, the permeate gas is depleted of the slower permeating gas. If a defect, open pore or oversized pore is present, then the leak through the membrane will contaminate the permeate stream, resulting in an elevated concentration of the slower permeating gas.

As required the chamber may comprise additional means for measuring and controlling parameters of the gas relevant for performing at least one of the gas-liquid diffusion test, the bubble-point test and the binary-gas test. Such means are known to a person skilled in the art and can be connected with the space, in which the object having a membrane is provided, or arranged in the chamber by a person skilled in the art without further guidance. For example the chamber may be provided with at least one pressure measuring device, a means for measuring the flow across the membrane and/ or at least one means for analyzing the gas composition. If provided, the at least one means for analyzing the gas composition is arranged in at least one side of the chamber relative to the mounting device, preferably the side in contact with the reference gas.

In addition to steps (a) to (f) described above, the method of performing a gas/liquid-based integrity test according to the present invention may comprise additional steps. The additional steps are not particularly limited and may be selected by the person skilled in the art as required depending on the object and membrane to be tested.

For example, between steps (d) and (e) the method of performing a gas/liquid-based integrity test according to the present invention may comprise an additional step of removing an excess water or aqueous solution from the space in which the object is arranged. Here, excess water or aqueous solution refers to water or aqueous solution not adhered to the object having a membrane. In said step water or aqueous solution adhered to the object, especially water or aqueous solution located inside the membrane and providing a liquid layer across the membrane is not removed. The principals and work-flows to remove the excess water or aqueous solution are readily known to a person skilled in the art of from known gas/liquid-based integrity tests and can be readily modified by a person skilled as required. For example, the excess water or aqueous solution can be removed without removing water or aqueous solution adhered to the object by draining the excess water or aqueous solution from the space. The excess water or aqueous solution may be drained via the at least one liquid outlet described for step (d).

In said step the excess water or aqueous solution of the space in which the object is arranged can be replaced by air, a test and/or a reference gas as described for step (e). The air, test gas and reference gas can be provided by at least one gas inlet as described for subsequent step (e). That is in the step of draining the water or aqueous solution the object having a membrane is brought in contact with air, the test gas and/or the reference gas. Preferably both main surfaces of the membrane are each independently brought into contact with air, the test gas and/or the reference gas.

The time between performing steps (d) and (e) is not particularly limited as long as the membrane is sufficiently wetted when starting step (e). That is step (e) can be performed at any time as long as the liquid layer across the membrane is still present. When performing step (e) not later than one hour after finishing step (d), the membrane is sufficiently wetted.

Subsequent to steps (a) to (f), the object having a membrane may be rinsed with water and/or dried. That is, the method of performing a gas/liquid-based integrity test according to the present invention may comprise at least one of a rinsing step, a drying step and a water-soluble gas replacement step. For example, the method of performing a gas/liquid-based integrity test may further comprise in the given order a rinsing step, a drying step and a water-soluble gas replacement step, or a rinsing step and a drying step, or a rinsing step and a water-soluble gas replacement step, or a drying step and a water-soluble gas replacement step.

In case the rinsing step is performed, it is performed after step (f), preferably directly after step (f).

In the rinsing step, potential leftovers of the water-soluble gas present on or in the object having a membrane, especially in or on the membrane, can be partially or completely removed. Leftovers of the water-soluble gas may be any gaseous component of the water-soluble gas or components formed by the reaction of any gaseous component with the water or aqueous solution. For example, carbonic acid, bicarbonates and carbonates formed by the reaction of carbon dioxide with water or the aqueous solution represent potential leftovers. Here, rinsing means that the object having a membrane and/or the membrane is surrounded with water.

Several methods for rinsing an object having a membrane are known to a person skilled in the art. The measures are based on surrounding the membrane by water, for example in the space for wetting. For example, the step of rinsing the membrane with water can comprise at least one step of filling the space surrounding the object with water, and preferably providing a water flow through the membrane.

In the present invention, the method of rinsing with water is not particularly limited. For example, the rinsing step may be carried out analogous to step (d) of wetting the membrane as described above. For example, the rinsing step can comprise at least one step of filling the space in which the object is arranged with water, and providing a water flow through the membrane. The water applied in the rinsing step may be water for injection or sterilized water for injection as set out in European Pharmacopoeia 11.4, 04/2024:0169.

In case the drying step is performed, it is performed after step (f), preferably directly after step (f) or directly after the rinsing step.

In the drying step, water and potential leftovers of the water-soluble gas present on or in the object having a membrane, especially in or on the membrane, can be partially or completely removed. Leftovers of the water-soluble gas may be any gaseous component of the water-soluble gas or components formed by the reaction of any gaseous component with the water or aqueous solution. For example, carbonic acid, bicarbonates and carbonates formed by the reaction of carbon dioxide with water or the aqueous solution represent potential leftovers. Several methods for drying an object having a membrane are known to a person skilled in the art.

In the present invention, the method for drying is not particularly limited. For example, the drying step may comprise at least one of air drying, dry air treatment and increased temperature, and a combined treatment of applying vacuum and microwave irradiation. Preferably, the object having a membrane is dried by a combined treatment of applying vacuum and microwave irradiation. By the combined treatment, the object is efficiently dried and carbon dioxide and/or carbonic acid, which may be left in the membrane in case the water-soluble gas applied in step (c) comprises carbon dioxide, are efficiently removed from the membrane.

In case the water-soluble gas replacement step is performed, it is performed after step (f), preferably directly after step (f) or directly after the drying step.

In the water-soluble gas displacement step, any remaining water-soluble gas or gaseous component thereof can be replaced in the membrane by air, preferable sterile air. The water-soluble gas replacement step can be carried out analogously to step (c), wherein potential leftovers of the water-soluble gas or gaseous components thereof are replaced by air. For example, remaining water-soluble gas can be replaced in the membrane by removing it by vacuum and adding air or by displacing it with an air flow. In this context, the definitions provided above for step (c) of the method of performing a gas/liquid-based integrity test according to the present invention are equally applicable to the water-soluble gas replacement step.

The method of performing a gas/liquid-based integrity test according to the present invention can be carried out as a pre-use test and/or an post-use test. That is, by the method of the present invention, integrity of an object having a membrane can be tested before use of the object and/or after use of the object. In case the object having a membrane is a filter, by the method of the present invention integrity of the filter can be tested before the filter is used for filtration and/or afterwards.

In a further aspect of the present invention, there is provided a method of producing an integrity-tested object having a membrane and at least one boundary member, the method comprising the following steps (I) to (III) in this order:
(I) providing a membrane and at least one boundary member;
(II) connecting the peripheral region of the membrane to the at least one boundary member to produce the object having a membrane; and
(III) integrity-testing the object having a membrane by carrying out any of the above-described method.

In this context, the definitions provided above for the method of performing a gas/liquid-based integrity test according to the present invention are equally applicable to the method of producing an integrity-tested object having a membrane according to the present invention. This holds particularly true for the components of the object having a membrane, such as a filter, and the method of performing a gas/liquid-based integrity test. By carrying out the production method according to the present invention, integrity-tested objects having a membrane can be obtained without unnecessary repetitions of the integrity test.

In the following, the method of producing an integrity-tested object having a membrane according to the present invention with its specific process steps is described in detail.

In step (I) of the method of production according to the present invention, a membrane and at least one boundary member are provided. Apart from these essential components, a backflow safeguard and/or a core may be provided as additional components in step (I). Furthermore, one or more drainage or support nonwovens may be provided as additional components in step (I). These additional components, if present, are suitably arranged in or on the membrane.

In step (II) of the method of production according to the present invention, the peripheral region of the membrane is connected to the at least one boundary member to produce the object having a membrane. By carrying out step (II), an object having a membrane, such as a filter, is obtained. For doing so, various different means including embedding, overmolding, hydrophobic gluing, or ultrasonic welding may be applied, depending on the shape of the membrane and the shape of the at least one boundary member. As required, e.g., in case of embedding, the at least one boundary member is at least partially softened to allow for a connection. Softening may be achieved by a targeted input of heat at those sites of the at least one boundary member, which shall be connected to the membrane. Suitable means to ensure a targeted input of heat are described in the art. In this regard, the input of heat is routinely adapted by the skilled person in view of the material of the at least one boundary member.

For example, in case the membrane has a tubular shape and the at least one boundary member is an end cap, after softening, the at least one boundary member may be placed onto the peripheral region of the membrane and any additional components, if present, for embedding. As mentioned above, in case there are two open end faces, each of these two open end faces of the membrane may be embedded in a respective boundary member. After embedding, the at least one boundary member with the peripheral region of the membrane embedded therein is cooled to ambient temperature which is understood herein as a temperature of 25°C.

For example, in case the membrane has a flat shape and the at least one boundary member is a frame, the at least one boundary member may be connected to the peripheral region of the membrane and any additional components, if present, by overmolding, hydrophobic gluing, or ultrasonic welding, without, however, being limited to such means.

In step (III) of the method of production according to the present invention, the object having a membrane is integrity tested by carrying out the method of performing a gas/liquid-based integrity test of the present invention.

By the method of performing a gas/liquid-based integrity test according to the present invention, the number of false-negative integrity tests can be reduced. Therefore, the number of the objects having a membrane, such as filters, that are incorrectly evaluated as lacking integrity in a conventional method of production is reduced and less objects having a membrane have to be tested according to the two-step procedure, i.e., by repeating the integrity test. Accordingly, by the method of production according to the present invention the number of performed integrity tests is reduced, which results in saved costs and increased production capacity.

## Claims

1. A method of performing a gas/liquid-based integrity test, the method comprising the following steps (a) to (f) in this order:
(a) providing an object having a membrane;
(b) arranging the object in a space for wetting;
(c) replacing air in the membrane by a water-soluble gas, wherein the water-soluble gas has a solubility in water at a temperature of 293.15 K and a pressure of 101.325 kPa of at least 54 mg/L;
(d) wetting the membrane of the object with water or an aqueous solution;
(e) applying gas pressure to at least one side of the membrane; and
(f) testing integrity of the object.

2. The method of performing a gas/liquid-based integrity test according to claim 1, wherein in step (d) water is used.

3. The method of performing a gas/liquid-based integrity test according to claim 2, wherein the water is water for injection or sterilized water for injection.

4. The method of performing a gas/liquid-based integrity test according to any one of claims 1 to 3, wherein the water-soluble gas comprises at least one of carbon dioxide, dinitrogen oxide, xenon and krypton.

5. The method of performing a gas/liquid-based integrity test according to any one of claims 1 to 4, wherein the water-soluble gas comprises carbon dioxide and/or dinitrogen oxide.

6. The method of performing a gas/liquid-based integrity test according to any one of claims 1 to 5, wherein the membrane comprises a hydrophobic material, wherein the hydrophobic material is a material having a contact angle with a water droplet determined according to DIN 55660-2 of more than 90°.

7. The method of performing a gas/liquid-based integrity test according to any one of claims 1 to 6, wherein step (c) comprises at least one cycle of step (c1) removing air from the space by applying vacuum, and
step (c2) subsequently filling the vacuumized space with the water-soluble gas.

8. The method of performing a gas/liquid-based integrity test according to any one of claims 1 to 6, wherein step (c) comprises displacing air by a flow of the water-soluble gas through the membrane.

9. The method of performing a gas/liquid-based integrity test according to any one of claims 1 to 8, wherein step (d) is performed at a temperature of less than 20°C.

10. The method of performing a gas/liquid-based integrity test according to any one of claims 1 to 8, wherein in step (d) the temperature is decreased to less than 20°C while wetting the membrane, wherein optionally the temperature is decreased stepwise and/or continuously.

11. The method of performing a gas/liquid-based integrity test according to any one of claims 1 to 10, wherein step (d) is performed at a pressure of 0.2 bar or more above atmospheric pressure.

12. The method of performing a gas/liquid-based integrity test according to any one of claims 1 to 10, wherein in step (d) the pressure is increased to 0.2 bar or more above atmospheric pressure while wetting the membrane, wherein optionally the pressure is increased stepwise and/or continuously.

13. The method of performing a gas/liquid-based integrity test according to any one of claims 1 to 12, wherein step (f) comprises performing at least one of a gas-liquid diffusion test, a bubble-point test and a binary-gas test.

14. The method of performing a gas/liquid-based integrity test according to any one of claims 1 to 13, wherein the object is a filter.

15. A method of producing an integrity-tested object having a membrane and at least one boundary member, the method comprising the following steps (I) to (III) in this order:
(I) providing a membrane and at least one boundary member;
(II) connecting the peripheral region of the membrane to the at least one boundary member to produce the object having a membrane; and
(III) integrity-testing the object having a membrane by carrying out the method according to any one of claims 1 to 14.
